# EUROPEAN PATENT APPLICATION

(11) **EP 4 679 621 A1**
(43) Date of publication of application: **14.01.2026**
(21) Application number: 25187824.5
(22) Date of filing: 07.07.2025
(51) Int. Cl.: H01M 50/597, H01M 50/595, H01M 50/586, H01M 10/04

(54) **ELECTRODE ASSEMBLY, SECONDARY BATTERY INCLUDING SAME AND ELECTRODE ASSEMBLY INSPECTION METHOD**

(30) Priority: 11.07.2024 KR 20240091912
(71) Applicant: SAMSUNG SDI CO., LTD., Yongin-si, Gyeonggi-do 17084 (KR)
(72) Inventor: LEE, Soohoon, 17084 Gyeonggi-do (KR); KIM, Gilho, 17084 Gyeonggi-do (KR); IM, Daeyun, 17084 Gyeonggi-do (KR); CHOI, Hyeongkeun, 17084 Gyeonggi-do (KR)
(74) Representative: Maiwald GmbH

(57) **Abstract**

An electrode assembly includes a first electrode plate, including a first electrode non-coated portion spaced from opposite ends of the first electrode plate in a longitudinal direction and a substrate tab connected to one surface of the first electrode non-coated portion, a second electrode plate, including a second electrode non-coated portion spaced from opposite ends of the second electrode plate in the longitudinal direction and a substrate tab connected to one surface of the second electrode non-coated portion, a separator between the first electrode plate and the second electrode plate and a first insulating tape and a second insulating tape covering a part of the substrate tab of at least one of the first electrode plate and the second electrode plate. The first insulating tape and the second insulating tape have different colors from each other.

## Description

### BACKGROUND

### Field

Aspects of embodiments of the present disclosure relate to an electrode assembly, a secondary battery including the electrode assembly, and an electrode assembly inspection method.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode assembly formed by sequentially stacking a positive electrode plate, a separator, and a negative electrode plate may cause a short circuit between the electrode plates or the electrode terminals. As an example, insulating tapes may be used to prevent a short circuit that may occur inside or outside the secondary battery.

The above information disclosed in this Background section is for enhancement of understanding of the background of the present disclosure, and therefore, it may contain information that does not constitute related (or prior) art.

### SUMMARY

During a process of manufacturing an electrode assembly, an attachment accuracy of the insulating tapes may deteriorate due to incorrect measurements of attachment positions of the insulating tapes.

Embodiments of the present disclosure may be directed to an electrode assembly, a secondary battery including the electrode assembly, and an electrode assembly inspection method having improved accuracy during a process.

These and other aspects and features of the present disclosure will be described in or will be apparent from the following description of embodiments of the present disclosure.

According to one or more embodiments of the present disclosure, an electrode assembly includes a first electrode plate, including a first electrode non-coated portion spaced from opposite ends of the first electrode plate in a longitudinal direction and a substrate tab connected to one surface of the first electrode non-coated portion, a second electrode plate, including a second electrode non-coated portion spaced from opposite ends of the second electrode plate in the longitudinal direction and a substrate tab connected to one surface of the second electrode non-coated portion, a separator between the first electrode plate and the second electrode plate and a first insulating tape and a second insulating tape covering a part of the substrate tab of at least one of the first electrode plate and the second electrode plate. The first insulating tape and the second insulating tape have different colors from each other.

In an embodiment, the first electrode plate may be a negative electrode, and the second electrode plate may be a positive electrode.

In an embodiment, the first insulating tape and the second insulating tape may be on opposite surfaces of the substrate tab, respectively.

In an embodiment, the colors of the first insulating tape and the second insulating tape may be a combination of complementary colors.

In an embodiment, the colors of the first insulating tape and the second insulating tape may be red and green, respectively.

In an embodiment, a width of each of the first insulating tape and the second insulating tape may be greater than a width of the substrate tab.

In an embodiment, a length of each of the first insulating tape and the second insulating tape may be longer than a length of the first electrode non-coated portion or the second electrode non-coated portion.

According to one or more embodiments of the present disclosure, a secondary battery includes: an electrode assembly, including a sequential stack of a first electrode plate, a separator, and a second electrode plate, and a case accommodating the electrode assembly. The first electrode plate includes a first electrode non-coated portion spaced from opposites ends of the first electrode plate in a longitudinal direction, and a substrate tab on one surface of the first electrode non-coated portion. The second electrode plate includes a second electrode non-coated portion spaced from opposite ends of the second electrode plate in the longitudinal direction, and a substrate tab on one surface of the second electrode non-coated portion. The electrode assembly further includes a first insulating tape and a second insulating tape covering a part of the substrate tab of at least one of the first electrode plate and the second electrode plate, and the first insulating tape and the second insulating tape have different colors from each other.

In an embodiment, the first insulating tape and the second insulating tape may be on opposite surfaces of the substrate tab, respectively.

In an embodiment, the colors of the first insulating tape and the second insulating tape may be a combination of complementary colors.

In an embodiment, the colors of the first insulating tape and the second insulating tape may be red and green, respectively.

In an embodiment, a width of each of the first insulating tape and the second insulating tape may be greater than a width of the substrate tab.

In an embodiment, a length of each of the first insulating tape and the second insulating tape may be longer than a length of the first electrode non-coated portion or the second electrode non-coated portion.

According to one or more embodiments of the present disclosure, an electrode assembly inspection method of a secondary battery includes connecting substrate tabs to non-coated portions of a first electrode plate and a second electrode plate, respectively, arranging a first insulating tape and a second insulating tape on surfaces of at least one of the substrate tabs, inspecting a presence or an absence of, and arrangement positions of, the first insulating tape and the second insulating tape by utilizing a vision inspection device, cutting the first electrode plate and the second electrode plate, and winding the first electrode plate, the second electrode plate, and a separator between the first electrode plate and the second electrode plate. The first insulating tape and the second insulating tape have different colors from each other.

In an embodiment, the inspecting of the presence or absence of, and the arrangement positions of, the first insulating tape and the second insulating tape by utilizing the vision inspection device may include utilizing a color filter having a complementary color to the colors of the first insulating tape and the second insulating tape to inspect the presence or absence of, and the arrangement positions of, the first insulating tape and the second insulating tape.

In an embodiment, the color filter may be blue or red.

In an embodiment, the first insulating tape and the second insulating tape may be on opposite surfaces of the at least one of the substrate tabs, respectively.

In an embodiment, the colors of the first insulating tape and the second insulating tape may be a combination of complementary colors.

In an embodiment, the colors of the first insulating tape and the second insulating tape may be red and green, respectively.

According to some embodiments of the present disclosure, an electrode assembly may include insulating tapes that prevent a short circuit between electrode plates or substrate tabs when a first electrode plate, a separator, and a second electrode plate are sequentially stacked, and a secondary battery including the electrode assembly.

According to some embodiments of the present disclosure, it may be possible to effectively distinguish between a positive electrode tab and a negative electrode tab by differentiating the colors of the first insulating tape arranged on the first substrate tab of the first electrode plate and the second insulating tape arranged on the second substrate tab of the second electrode plate.

According to some embodiments of the present disclosure, a vision inspection using a vision inspection device may be improved by making (e.g., setting) the colors of the first insulating tape and the second insulating tape arranged on both surfaces of the substrate tab of each electrode of the secondary battery to be a combination of complementary colors.

According to some embodiments of the present disclosure, a vision inspection using a vision inspection device may be improved by making (e.g., setting) the colors of the insulating tapes and the color filter to be a combination of complementary colors.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure and further describe aspects and features of the present disclosure together with the detailed description of the present disclosure. Thus, the present disclosure should not be construed as being limited to the drawings.
FIG. 1 is an exploded perspective view of a part of a secondary battery according to an embodiment of the present disclosure.
FIG. 2 is a plan view illustrating an electrode assembly according to an embodiment of the present disclosure.
FIG. 3 is a plan view illustrating electrode plates and insulating tapes according to an embodiment of the present disclosure.
FIG. 4 is an enlarged plan view of the part A of FIG. 3.
FIG. 5 is an enlarged plan view of the part A' of FIG. 3.
FIG. 6 is a sectional view illustrating a portion obtained by cutting an insulating tape according to an embodiment of the present disclosure.
FIG. 7 is a plan view illustrating an insulating film and an insulating tape according to an embodiment of the present disclosure.
FIG. 8 is a perspective view illustrating a procedure for inspecting the electrode plate by using a vision inspection device according to an embodiment of the present disclosure.
FIG. 9 is a diagram illustrating an inspection capability of a vision inspection using a color filter according to some embodiments of the present disclosure.
FIG. 10 is a diagram illustrating a brightness difference detected in the vision inspection of the electrode plate using the insulating tapes of various color combinations according to some embodiments of the present disclosure.
FIG. 11 is a flowchart illustrating an electrode assembly inspection method according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the other element, and still another element may also be interposed between the other element and the arbitrary element disposed on (or under) the other element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, layers and regions illustrated in the drawings may be exaggerated in size and relative size for the clarity of the description. For example, the sizes illustrated in the drawings are merely for the sake of convenience of understanding and are not limited thereto. Throughout the specification, the same reference sign denotes the same component.

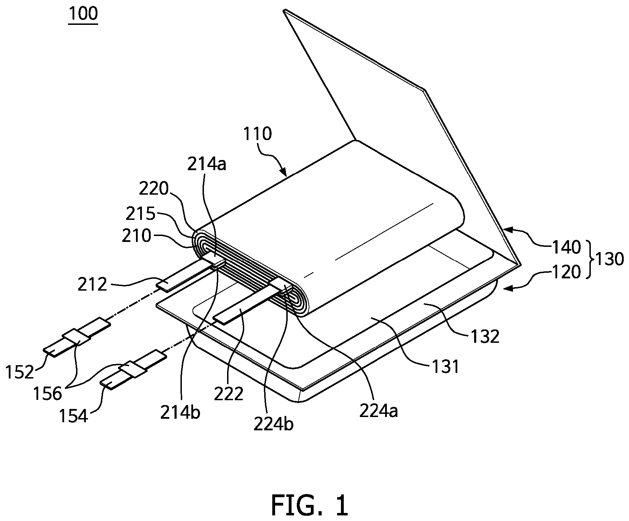

FIG. 1 is an exploded perspective view of a part of a secondary battery according to an embodiment of the present disclosure.

A secondary battery 100 according to the present embodiment may include an electrode assembly 110, and a case 130 that accommodates the electrode assembly 110 therein.

The electrode assembly 110 may be formed by winding a first electrode plate 210 and a second electrode plate 220 with a separator 215 interposed therebetween. However, the present disclosure is not limited thereto, and the electrode assembly 110 may be formed in a structure in which a plurality of sheets of positive electrodes and negative electrodes are alternately stacked with the separator 215 interposed therebetween.

The first electrode plate 210 may be formed as a negative electrode plate, and the second electrode plate 220 may be formed as a positive electrode plate, or vice versa. When the first electrode plate 210 is formed as the negative electrode plate, the first electrode plate 210 may be formed by applying a negative electrode active material layer with a carbon material as a main component onto a negative current collector made of a thin copper foil and both surfaces of the negative current collector. Negative electrode non-coated portions that are regions where a negative electrode active material layer is not coated may be formed at both ends of the negative current collector.

When the second electrode plate 220 is formed as the positive electrode plate, the second electrode plate 220 may be formed by applying a positive electrode active material layer with a lithium-based oxide as a main component onto both surfaces of a positive current collector made of a thin aluminum foil. Positive electrode non-coated portions that are regions where a positive electrode active material layer is not coated may be formed on both ends of a positive current collector.

The secondary battery 100 illustrated in FIG. 1 may be a lithium secondary battery.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector but is not limited thereto.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, and an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiO ₓ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐC₀G_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In the electrode assembly 110, a first substrate tab 212 may be connected to one side of the first electrode plate 210, and a second substrate tab 222 may be connected to one side of the second electrode plate 220. The first substrate tab 212 and the second substrate tab 222 may be connected by welding tabs to non-coated portions of the first electrode plate 210 and the second electrode plate 220 and may be formed by punching the non-coated portions of the first electrode plate 210 and the second electrode plate 220. In a winding state, the first substrate tab 212 and the second substrate tab 222 may be arranged side by side with each other at regular intervals. When the first electrode plate 210 is formed as the negative electrode plate, the first substrate tab 212 may be formed as a negative electrode tab, and the second substrate tab 222 may be formed as a positive electrode tab. When polarities of the first electrode plate 210 and the second electrode plate 220 are opposite to each other, the first substrate tab 212 may be formed as the positive electrode tab, and the second substrate tab 222 may be formed as the negative electrode tab.

In the electrode assembly 110, the first substrate tab 212 and the second substrate tab 222 may be connected to the non-coated portions of the first electrode plate 210 and the second electrode plate 220. The substrate tabs 212 and 222 may be connected to protrude to an outside of the electrode assembly 110. A first insulating tape 214a and a second insulating tape 214b may be arranged to cover a part of the first substrate tab 212. A third insulating tape 224a and a fourth insulating tape 224b may be arranged to cover a part of the second substrate tab 222.

The first substrate tab 212 and the second substrate tab 222 may be connected to (e.g., coupled to or attached to) a first lead tab 152 and a second lead tab 154, such that the electrode assembly 110 is electrically connected to the outside. Parts of the lead tabs 152 and 154 are formed to be exposed to an outside of the case 130. Hereinafter, the first substrate tab 212 and the second substrate tab 222 may be collectively referred to as the substrate tabs 212 and 222, and the first lead tab 152 and the second lead tab 154 may be collectively referred to as the lead tabs 152 and 154. The substrate tabs 212 and 222 and the lead tabs 152 and 154 may be generally made of a metal, such as aluminum, copper, or nickel, and may have a suitable electrical conductivity (e.g., a certain or predetermined electrical conductivity or more) in order to minimize or reduce a voltage drop.

The lead tabs 152 and 154 may include an insulating film 156 positioned on one surface or both surfaces of an upper surface and a lower surface. The lead tabs 152 and 154 may include the insulating film 156 that is attached to a portion in contact with a sealing portion at an edge of the case 130.

The case 130 forms an overall appearance of the secondary battery 100, and may be made of a conductive metal, such as aluminum, an aluminum alloy, or a nickel-plated steel. The case 130 may provide a space where the electrode assembly 110 is accommodated. According to an embodiment, the case 130 may be a pouch-kind of case, and the secondary battery 100 may be a pouch-kind of secondary battery. However, the present disclosure is not limited thereto, and the secondary battery 100 may be a battery cell having any suitable shape, such as a circular shape, an angular shape, or a cylindrical shape.

The case 130 according to an embodiment of the present disclosure may include an upper case 140 and a lower case 120 formed by folding a middle portion with respect to a longitudinal direction of one side of a case membrane having a square or substantially square shape that is generally formed in an integral manner. A receptacle 131 in which the electrode assembly 110 is accommodated may be formed in a substantially central region of the lower case 120 by press machining. An extension portion 132 may be formed at an upper edge of the receptacle 131 in four directions.

The lower case 120 may be connected to (e.g., coupled to or attached to) one opened end of the upper case 140, and thus, the upper case 140 may be sealed. According to one embodiment, one surface of the lower case 120 may be opened, and the upper case 140 may seal one opened side of the lower case 120.

In an embodiment, the case 130 may include an electrolyte inlet. For example, the electrolyte inlet may be a hole formed in the case 130. The electrolyte inlet may be formed to inject an electrolyte into the case 130 after the upper case 140 is connected to (e.g., coupled to or attached to) seal an opening of the lower case 120. The electrolyte inlet may be sealed with a sealing member after the electrolyte is injected.

The secondary battery 100 may be a lithium battery cell (e.g.,, a lithium-ion battery cell), a sodium battery cell, or the like. However, the present disclosure is not limited thereto, and the secondary battery 100 may include all suitable kinds of batteries that may repeatedly provide electricity through charge and discharge. In an embodiment, when the secondary battery 100 is the lithium battery cell, the lithium battery cell may be used in electric vehicles (EVs) because of its excellent lifespan and high rate characteristics. The lithium secondary battery may also be used for hybrid vehicles, such as plug-in hybrid electric vehicles (PHEVs). The lithium battery cell may be used in various fields requiring or desiring large amounts of power storage. For example, the lithium battery cell may be used for electric bikes, electric tools, and the like.

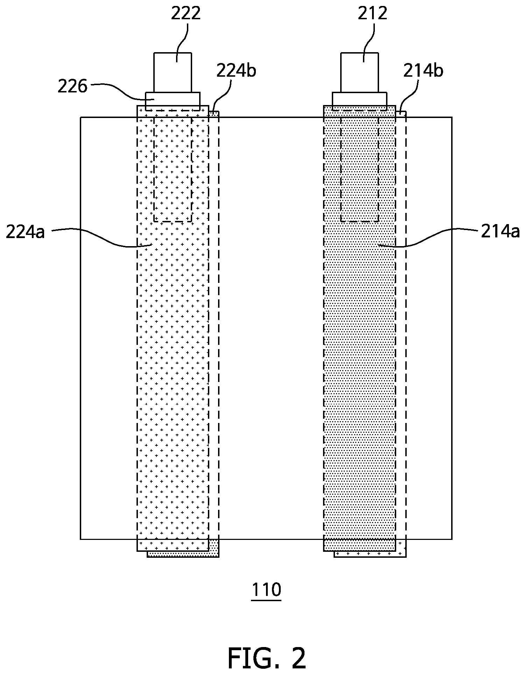

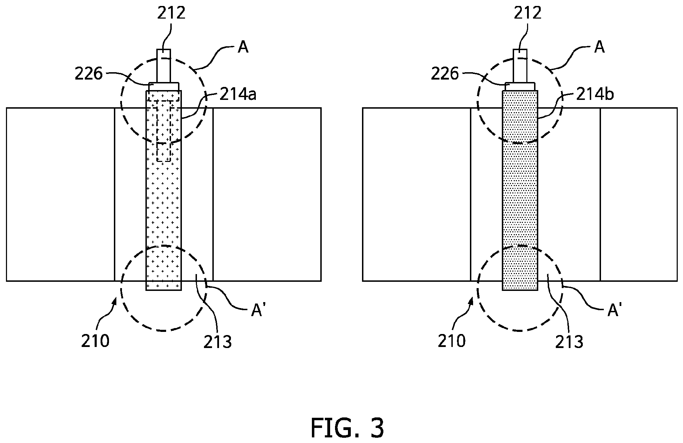

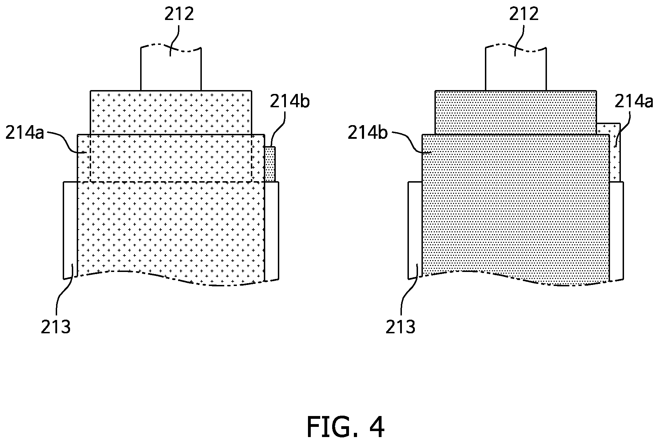

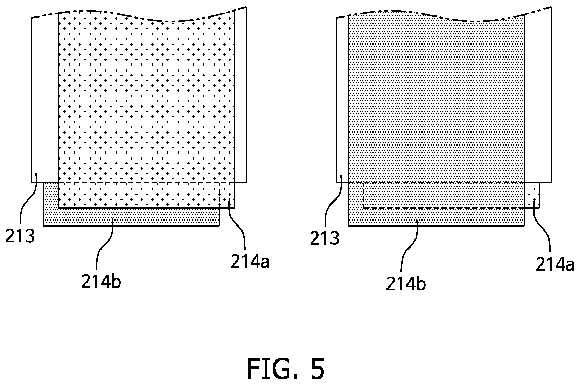

FIG. 2 is a plan view illustrating an electrode assembly according to an embodiment of the present disclosure. FIG. 3 is a plan view illustrating electrode plates and insulating tapes according to an embodiment of the present disclosure. For example, FIG. 3 illustrates a configuration in which the insulating tapes are attached to both surfaces of the electrode plates. FIG. 4 is an enlarged plan view of the part A of FIG. 3, and FIG. 5 is an enlarged plan view of the part A' of FIG. 3.

As illustrated, in the electrode assembly 110, the first substrate tab 212 and the second substrate tab 222 may be connected to non-coated portions 213 of the first electrode plate 210 and the second electrode plate 220. The substrate tabs 212 and 222 may be connected to protrude to an outside of the electrode assembly 110. The first insulating tape 214a and the second insulating tape 214b having different colors from each other may be arranged on both surfaces (e.g., opposite surfaces) of the first substrate tab 212, respectively, to cover a part of the first substrate tab 212. The third insulating tape 224a and the fourth insulating tape 224b having different colors from each other may be arranged on both surfaces (e.g., opposite surfaces) of the second substrate tab 222, respectively, to cover a part of the second substrate tab 222. The first insulating tape 214a and second insulating tape 214b may have different colors from each other, and the third insulating tape 214b and the fourth insulating tape 224b may have different colors from each other.

In some embodiments, the first insulating tape 214a and the second insulating tape 214b may be arranged successively from a part of the substrate tab 212 to the non-coated portion 213. The first insulating tape 214a and the second insulating tape 214b may be arranged to face each other on both surfaces of the substrate tab 212.

Referring to FIG. 2, a length of each of the insulating tapes 214a, 214b, 224a, and 224b in a protruding direction (e.g., an upper-lower direction of FIG. 2) of each of the substrate tabs 212 and 222 may be equal to or greater than a length of the electrode assembly 110. The length of the electrode assembly 110 in the protruding direction of each of the substrate tabs 212 and 222 may be equal to or substantially equal to a length of the non-coated portion 213.

According to an embodiment, upper ends of the insulating tapes 214a, 214b, 224a, and 224b may be arranged in an upper direction from an upper end of the electrode assembly 110. Lower ends of the insulating tapes 214a, 214b, 224a, and 224b may be arranged in a lower direction from a lower end of the electrode assembly 110. In other embodiments, the upper ends of the insulating tapes 214a, 214b, 224a, and 224b may be arranged in the same or substantially the same position as that of the upper end of the electrode assembly 110, and the lower ends of the insulating tapes 214a, 214b, 224a, and 224b may be arranged in the lower direction from the lower end of the electrode assembly 110. In other embodiments, the upper ends of the insulating tapes 214a, 214b, 224a, and 224b may be arranged in the upper direction from the upper end of the electrode assembly 110, and the lower ends of the insulating tapes 214a, 214b, 224a, and 224b may be arranged in the same or substantially the same position as that of the lower end of the electrode assembly 110. If (e.g., when) the upper ends of the insulating tapes 214a, 214b, 224a, and 224b are arranged in the upper direction from the upper end of the electrode assembly 110, the insulating tapes 214a, 214b, 224a, and 224b may protrude to the outside of the electrode assembly 110 in a direction from which the substrate tabs 212 and 222 protrude. As a result, the different colors of the insulating tapes 214a, 214b, 224a, and 224b may be used to distinguish between the positive electrode tab and the negative electrode tab.

According to an embodiment, a width of each of the insulating tapes 214a, 214b, 224a, and 224b in a direction perpendicular to or substantially perpendicular to the protruding direction of the substrate tabs 212 and 222 (e.g., the left and right directions of FIG. 2) may be equal to or greater than a width of each of the substrate tabs 212 and 222. According to an embodiment, a right end of each of the insulating tapes 214a, 214b, 224a, and 224b may be arranged in a right direction of a right end of each of the substrate tabs 212 and 222 to which the tape is attached. A left end of each of the insulating tapes 214a, 214b, 224a, and 224b may be arranged in a left direction from a left end of each of the substrate tabs 212 and 222 to which the tape is attached. In other embodiments, the right end of each of the insulating tapes 214a, 214b, 224a, and 224b may be arranged in the right direction of the right end of each of the substrate tabs 212 and 222 to which the tape is attached, and the left end of each of the insulating tapes 214a, 214b, 224a, and 224b may be arranged in the same or substantially the same position as that of the left end of each of the substrate tabs 212 and 222 to which the tape is attached. In other embodiments, the left end of each of the insulating tapes 214a, 214b, 224a, and 224b may be arranged in the left direction from the left end of each of the substrate tabs 212 and 222 to which the tape is attached, and the right end of each of the insulating tapes 214a, 214b, 224a, and 224b may be arranged in the same or substantially the same position as that of the right end of each of the substrate tabs 212 and 222 to which the tape is attached.

In some embodiments, the substrate tabs 212 and 222 may include an insulating film 226 positioned on one surface or both surfaces of an upper surface and a lower surface. The substrate tabs 212 and 222 may include the insulating film 226 that is arranged to be spaced apart (e.g., separated) from the upper end of the electrode assembly 110.

According to some embodiments, each of the insulating tapes 214a, 214b, 224a, and 224b may be arranged to cover a part of a corresponding insulating film 226. Each of the insulating tapes 214a, 214b, 224a, and 224b may be arranged successively from a part of the corresponding insulating film 226 to the non-coated portion 213.

According to an embodiment, the upper end of each of the insulating tapes 214a, 214b, 224a, and 224b may be arranged in a lower direction from an upper end of the corresponding insulating film 226. The upper end of each of the insulating tapes 214a, 214b, 224a, and 224b may be arranged in an upper direction from a lower end of the corresponding insulating film 226. In other embodiments, the upper end of each of the insulating tapes 214a, 214b, 224a, and 224b may be arranged in the lower direction from the lower end of the corresponding insulating film 226. This characteristic configuration may serve as a safety member in the secondary battery 100. For example, the secondary battery according to an embodiment of the present disclosure may include the insulating tapes 214a, 214b, 224a, and 224b having characteristics of the length and arrangement position described above, and thus, a risk of a short circuit that may occur when the electrode plates 210 and 220 are wound may be prevented or reduced in advance.

The electrode plates 210 and 220 may include the non-coated portion 213 in which the active material layer is not applied. According to some embodiments, the electrode plates 210 and 220 may include the non-coated portion 213 on one surface or both surfaces thereof. Referring to FIG. 3, the non-coated portion 213 may be formed to extend from an upper end to a lower end of the first electrode plate 210. The non-coated portion 213 may be formed to extend from an upper end to a lower end of the second electrode plate 220.

According to an embodiment, the non-coated portion 213 may be formed to be spaced apart (e.g., separated) from both ends (e.g., opposite ends) of the active material layer in a longitudinal direction of the electrode plate (e.g., the left and right direction of FIG. 3). According to other embodiments, the non-coated portion 213 may be formed at an edge of the electrode plate to be spaced apart (e.g., separated) from the end of the active material layer in the longitudinal direction of the electrode plate.

Each of the substrate tabs 212 and 222 may be connected to one surface or both surfaces (e.g., opposite surfaces) of the non-coated portion 213 of the corresponding one of the electrode plates 210 and 220. According to an embodiment, the substrate tabs 212 and 222 may be connected to one surface (e.g., to only one surface) of the corresponding one of the electrode plates 210 and 220. When each of the substrate tabs 212 and 222 is connected to only one surface of the corresponding one of the electrode plates 210 and 220, the one surface of the electrode plate in which the substrate tab is arranged may be defined as a surface A, and the other side of the electrode plate in which the substrate tab is not arranged may be defined as a surface B.

In FIGS. 3 and 5, the left side illustrates a configuration in which the insulating tape is attached to the surface A of the electrode plate, and the right side illustrates a configuration in which the insulating tape is attached to the surface B of the electrode plate. In the substrate tab 212, the first insulating tape 214a may be arranged on the surface A of the non-coated portion 213, and the second insulating tape 214b may be arranged on the surface B of the non-coated portion 213, or vice versa. According to an embodiment, each of the first insulating tape 214a and the second insulating tape 214b may be arranged to cover a part of the substrate tab 212. Each of the first insulating tape 214a and the second insulating tape 214b may be arranged to cover a part of the insulating film 226.

According to some embodiments, a color of the first insulating tape 214a may be different from a color of the second insulating tape 214b. The colors of the first insulating tape 214a and the second insulating tape 214b may be a combination of complementary colors. For example, the color combination of the first insulating tape 214a and the second insulating tape 214b may be one of various combinations of red and bluish green, orange and blue, yellow and indigo, light green and purple, or green and purple. However, the present disclosure is not limited thereto.

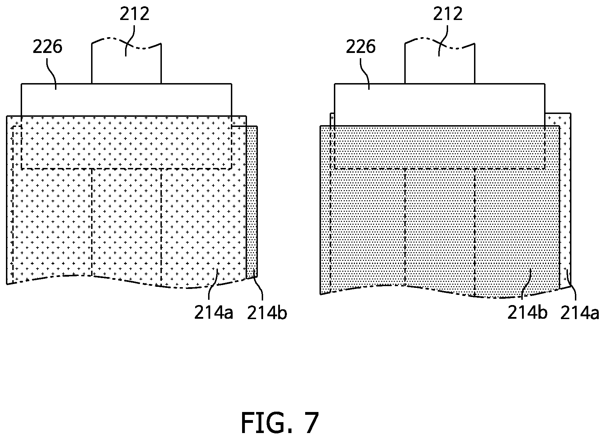

According to an embodiment, the color of the first insulating tape 214a may be green, and the color of the second insulating tape 214b may be red, or vice versa. This combination may be related to a vision inspection of the presence or absence and the arrangement position of the insulating tape during the inspection of the electrode plates 210 and 220 of the electrode assembly 110. The combination may be related to maximizing or improving an inspection capability of the vision inspection using a vision inspection device. Such an example will be described in more detail below with reference to FIGS. 7 to 10.

Referring to FIGS. 4 and 5, the first insulating tape 214a may be arranged on the surface A of the non-coated portion 213, and the second insulating tape 214b may be arranged on the surface B of the non-coated portion 213. The first insulating tape 214a and the second insulating tape 214b may be arranged to face each other. As viewed from the top of the surface A, at least a part of the second insulating tape 214b may protrude to an outside of the first insulating tape 214a.

According to an embodiment, the colors of the first insulating tape 214a and the second insulating tape 214b may be red and green, respectively. During the vision inspection, the presence or absence and the arrangement position of the first insulating tape 214a may be inspected on the top of the surface A of the non-coated portion. As viewed from the top of the surface A of the non-coated portion, the color of the portion of the second insulating tape 214b protruding to the outside of the first insulating tape 214a may have a complementary color relationship with the color of the first insulating tape 214a. In an embodiment, because the colors of the first insulating tape 214a and the second insulating tape 214b are complementary colors, it may be easier to distinguish boundaries of the insulating tapes 214a and 214b by the vision inspection, and thus, the inspection capability may be improved.

In a comparative example, both the colors of the first insulating tape 214a and the second insulating tape 214b are green. During the vision inspection, the presence or absence and the arrangement position of the first insulating tape 214a may be inspected on the top of the surface A of the non-coated portion. The first insulating tape 214a and the second insulating tape 214b may be arranged to face each other. As viewed from the top of the surface A of the non-coated portion, at least a part of the second insulating tape 214b may protrude to the outside of the first insulating tape 214a. In an embodiment, the vision inspection device may detect not only the first insulating tape 214a, but also the second insulating tape 214b. Because the colors of the first insulating tape 214a and the second insulating tape 214b are the same in the comparative example, it may be difficult to distinguish the boundaries between the insulating tapes 214a and 214b by the vision inspection, and thus, the inspection capability may deteriorate. Thus, in some embodiments of the present disclosure, the colors of the first insulating tape 214a and the second insulating tape 214b may be set in a combination of complementary colors in consideration of the inspection capability of the vision inspection.

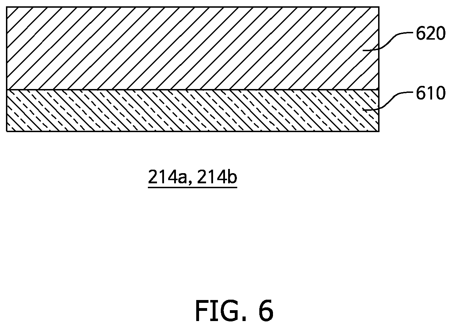

FIG. 6 is a sectional view illustrating a portion obtained by cutting an insulating tape according to an embodiment of the present disclosure.

According to some embodiments, each of the insulating tapes 214a and 214b may include an adhesive layer 610 to be attached to the substrate tab, and an insulating layer 620 for preventing a short circuit. A thickness of the adhesive layer 610 may be equal to or less than a thickness of the insulating layer 620.

According to some embodiments, the insulating layer 620 may include at least one of polypropylene sulfide (PPS), polyamide (PI), polyethylene terephthalate (PET), polyethylene (PE), polypropylene (PP), and Polypheylene ether (PPE), which are heat-resistant and are not deformed such as a shrinkage at a high temperature.

According to an embodiment, the insulating layer 620 may contain more pigments. The pigments may contain at least one of inorganic pigments and organic pigments.

According to some embodiments, a thickness of each of the insulating tapes 214a and 214b may range from a few micrometers (µm) to several tens of micrometers (µm). According to an embodiment, the thickness of each of the insulating tapes 214a and 214b may be 10 µm, the thickness of the insulating layer 620 may be 7.5 µm, and the thickness of the adhesive layer 610 may be 2.5 µm. In this case, during the vision inspection of the electrode plates 210 and 220, because the insulating tapes 214a and 214b have appropriate saturation for the vision inspection, deterioration of the inspection capability of the vision inspection may be prevented. However, the thickness of the insulating tape is not particularly limited thereto.

FIG. 7 is a plan view illustrating the insulating film and the insulating tape according to an embodiment of the present disclosure. In FIG. 7, a left side illustrates a configuration in which the insulating tape is attached to the surface A of the electrode plate, and a right side illustrates a configuration in which the insulating tape is attached to the surface B of the electrode plate.

According to an embodiment, the insulating film 226 may be arranged on the substrate tab 212 for sealing with the case. The insulating film 226 may be positioned on one surface or both surfaces (e.g., opposite surfaces) of the upper surface and the lower surface of the substrate tab 212 to cover a part of the electrode plate 210. The insulating film 226 may be spaced apart from (e.g., may be separated from) the upper end of the electrode plate 210, and may be positioned on one surface or both surfaces of the upper surface and the lower surface of the substrate tab 212.

Each of the insulating tapes 214a and 214b may be arranged to overlap with the insulating film 226 to prevent a short circuit. In an embodiment, when the electrode plate 210 is illuminated with a lighting during the vision inspection of the electrode plate, and sensitivities of the insulating film 226 and the insulating tape 214a and 214b to the lighting are similar to each other, the inspection capability of the vision inspection of the electrode plate 210 may deteriorate by the insulating film 226. According to some embodiments, a color filter may be used during the vision inspection of the electrode plate 210 by using the vision inspection device in order to prevent or substantially prevent the deterioration in the inspection capability that may occur when the sensitivities of the insulating film 226 and the insulating tapes 214a and 214b to the lighting are similar to each other.

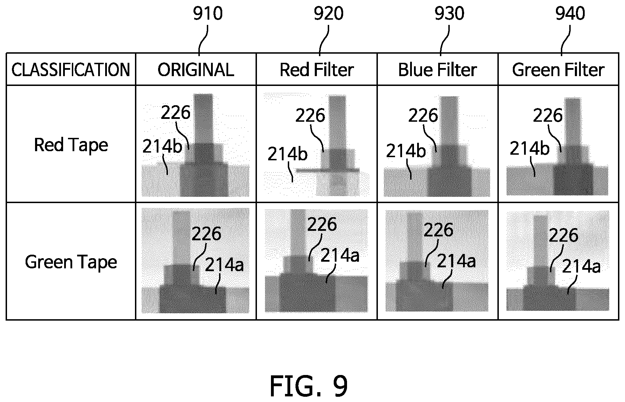

Because the color filter allows only a desired color (e.g., a particular or predetermined color) to pass through, the brightness of the color may be high during the vision inspection. However, because the color filter does not allow a complementary color to pass through, the brightness of the color may be low during the vision inspection. Such examples will be described in more detail below with reference to FIG. 9.

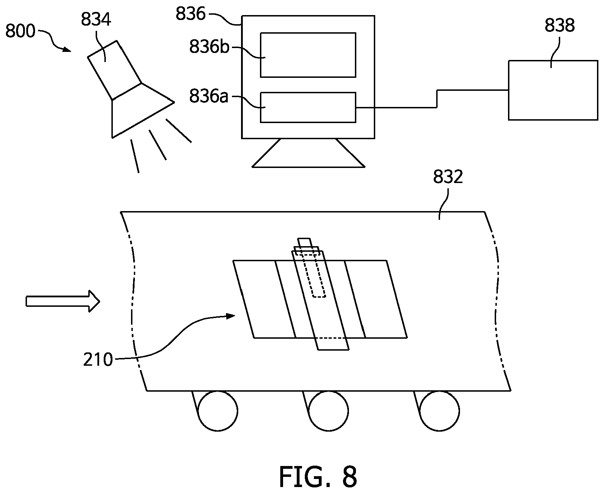

FIG. 8 is a perspective view illustrating a procedure for inspecting the electrode plate by using the vision inspection device according to an embodiment of the present disclosure.

In a procedure 800 for inspecting the electrode plate, a conveyor belt 832 may be driven to allow the electrode plate 210 to pass through below a side on which a lighting 834 and a camera 836 are positioned. The lighting 834 may irradiate the electrode plate 210 positioned on the conveyor belt 832 with light (e.g., white light). The camera 836 may capture reflected light reflected from the light applied to the electrode plate 210 by the lighting 834 or the electrode plate 210.

The camera 836 may include a filter 836a and an image sensor 836b. The image sensor 836b may generate an image by converting light incident on the camera 836 into an electrical signal. The image generated by the image sensor 836b may be transmitted to a computer 838. The computer 838 may compare the generated image with a normal product image stored in advance and may determine the presence or absence of the insulating tape attached to the electrode plate 210 and the arrangement position thereof. In an embodiment, the computer 838 may use suitable image recognition and classification methods known to those having ordinary skill in the art, such as machine learning algorithms and histogram-based analysis methods, in analyzing and processing the images.

The filter 836a may include an optical component or a digital image processing means for further emphasizing a difference in brightness of the reflected light reflected from the light applied to the electrode plate 210 by the lighting 834. For example, the filter 836a may be a color filter that allows light of a desired color (e.g., a particular or predetermined color) to pass through, and not to pass light of another color through. The light incident on the camera 836 may be further emphasized while the light passes through the filter 836a, and the light having passed through the filter 836a may be generated as a black-and-white image (or a grayscale image) with the brightness difference further emphasized by the image sensor 836b.

FIG. 9 is a diagram illustrating the inspection capability of the vision inspection using the color filter according to some embodiments of the present disclosure.

According to some embodiments, color filters 920, 930, and 940 used during the vision inspection of the electrode plate may have complementary colors to the colors of the insulating tape 214a and 214b. For example, when the color of one of the insulating tapes 214a and 214b is red, the color of the color filter may be blue or green. When the color of one of the insulating tapes 214a and 214b is green, the color of the color filter may be red.

According to an embodiment, the color of the first insulating tape 214a is green, and the color filter may be a red filter 920. Referring to FIG. 9, in the image captured by the camera in the vision inspection having such a configuration, a brightness difference between the insulating film 226 and the first insulating tape 214a and a brightness difference between the second insulating tape 214b and the first insulating tape 214a may be emphasized, and thus, a boundary between the insulating film and the insulating tape or a boundary between a plurality of insulating tapes may be clearly distinguished. As a result, the inspection capability may be improved.

In a comparative example, the color of the first insulating tape 214a is green and the color filter is a blue filter 930 or a green filter 940. Referring to FIG. 9, when the color filter is the blue filter 930, in the image captured by the camera in the vision inspection having such a configuration, the brightness difference between the second insulating tape 214b and the first insulating tape 214a may be small, and thus, the boundary therebetween may not be well distinguished. When the color filter is the green filter 940, in the image captured by the camera, the brightness difference between the second insulating tape 214b and the first insulating tape 214a may be small, and thus, the boundary therebetween may not be well distinguished. As such, in order to improve the inspection capability of the vision inspection of the electrode plate, when the color of the insulating tape is green, the color of the color filter may be red in some embodiments.

According to an embodiment, the color of the second insulating tape 214b is red, and the color filter is the blue filter 930. Referring to FIG. 9, in the image captured by the camera in the vision inspection having such a configuration, the boundary may be clearly distinguished by the brightness difference between the insulating film 226 and the second insulating tape 214b, and thus, the inspection capability may be improved.

As a comparative example, the color of the second insulating tape 214b is red, and the color filter is the red filter 920 or the green filter 940. Referring to FIG. 9, when the color filter is the red filter 920, in the image of the vision inspection, the second insulating tape 214b may be bright to the extent that the second insulating tape is indistinguishable from the background. When the color filter is the green filter 940, the brightness difference between the insulating film 226 and the second insulating tape 214b is low, and thus, the boundary therebetween may not be distinguished. Thus, in order to improve the inspection capability of the vision inspection of the electrode plate, in a case where the color of the insulating tape is red, the color of the color filter may be blue in some embodiments.

However, the color combination of the insulating tape attached to the electrode plate which is a target of the vision inspection and the color filter is not particularly limited to the examples described above. The color combination of the insulating tape attached to the electrode plate which is the target of the vision inspection and the color filter installed in the camera may be set in various different methods, depending on whether or not the boundary between the components can be determined by the brightness difference between the components in the image captured by the camera.

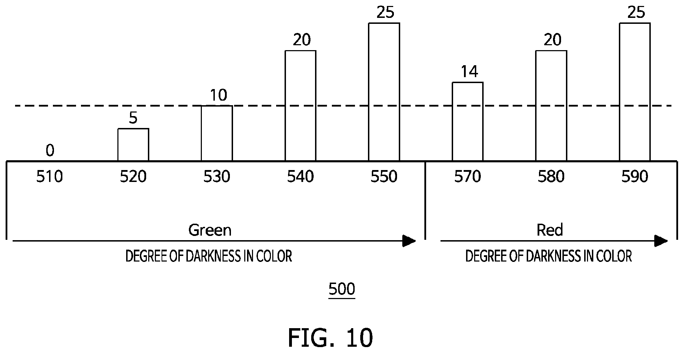

FIG. 10 is a diagram illustrating the brightness difference detected in the vision inspection of the electrode plate using the insulating tapes of various color combinations according to some embodiments of the present disclosure.

According to some embodiments, the first insulating tape 214a attached to one of the surfaces of the substrate tab 212 of the electrode plate 210 may be green, and the second insulating tape 214b attached to the other surface may be red. The first insulating tape 214a may be a low-saturation green or a high-saturation green.

According to an embodiment, the first insulating tape 214a may be a highest-saturation green. Referring to FIG. 10, a vertical value of a bar graph may indicate a difference between a brightness measurement value of the insulating film 226 and a brightness measurement value of the first insulating tape 214a detected on the image captured in the vision inspection. The greater the difference between the brightness measurement values, the better the inspection capability of the image of the vision inspection with respect to tracking boundary values of various components of the electrode plate 210. When the saturation of the first insulating tape 214a is the highest, the difference between the brightness measurement value of the insulating film 226 and the brightness measurement value of the first insulating tape 214a may be the largest at 25.

As a comparative example, the first insulating tape 214a may be green having a medium saturation. Referring to FIG. 10, when the saturation of the first insulating tape 214a is medium, the difference between the brightness measurement value of the insulating film 226 and the brightness measurement value of the first insulating tape 214a may be 10. Thus, in some embodiments of the present disclosure, the color of the first insulating tape 214a may be in the highest-saturation green, such that the difference between the brightness measurement value of the insulating film 226 and the brightness measurement value of the first insulating tape 214a detected on the image captured in the vision inspection is sufficiently large.

According to an embodiment, the second insulating tape 214b may be a high-saturation red. Referring to FIG. 10, when the saturation of the second insulating tape 214b is the highest, the difference between the brightness measurement value of the insulating film 226 and the brightness measurement value of the second insulating tape 214b may be the largest at 25.

As a comparative example, the second insulating tape 214b may be red having a medium saturation. Referring to FIG. 10, when the saturation of the second insulating tape 214b is medium, the difference between the brightness measurement value of the insulating film 226 and the brightness measurement value of the second insulating tape 214b may be 20. Thus, in some embodiments of the present disclosure, the color of the second insulating tape 214b may be in the highest-saturation red, such that the difference between the brightness measurement value of the insulating film 226 and the brightness measurement value of the second insulating tape 214b detected on the image captured in the vision inspection is sufficiently large.

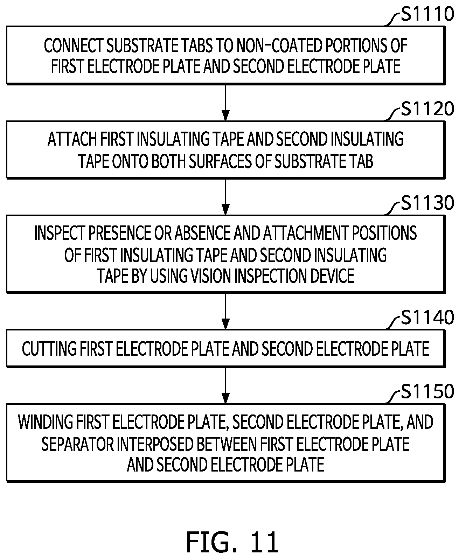

FIG. 11 is a flowchart illustrating an electrode assembly inspection method according to an embodiment of the present disclosure.

The electrode assembly inspection method may be initiated and the substrate tabs may be connected to the non-coated portions of the first electrode plate and the second electrode plate (S1110).

Subsequently, the first insulating tape and the second insulating tape may be attached to both surfaces (e.g., opposite surfaces) of the substrate tab (S1120). In an embodiment, the first insulating tape and the second insulating tape may have different colors from each other.

In an embodiment, the first insulating tape and the second insulating tape may be arranged on both surfaces (e.g., opposite surfaces) of the substrate tab, respectively. In an embodiment, the colors of the first insulating tape and the second insulating tape may be a combination of complementary colors. In an embodiment, the colors of the first insulating tape and the second insulating tape may be red and green, respectively.

The presence or absence and attachment positions of the first insulating tape and the second insulating tape may be inspected by using the vision inspection device (S1130). In an embodiment, the color filter installed in the camera used in the vision inspection device may be blue or red. In an embodiment, the color filter may be a complementary color to the color of the first insulating tape and/or the color of the second insulating tape.

Subsequently, the first electrode plate and the second electrode plate may be cut (S1140). The electrode assembly may be manufactured by winding the first electrode plate, the second electrode plate, and the separator interposed between the first electrode plate and the second electrode plate (S1150).

However, the present disclosure is not limited to the flow chart described above with reference to FIG. 11. For example, one or more of the processes in the flowchart and/or the above description may be added, changed, and/or deleted, the order of one or more processes may be changed, and/or one or more processes may be concurrently or substantially simultaneously performed with each other.

### Explanation of reference symbols

100: secondary battery
110: electrode assembly
130: case
210: first electrode plate
220: second electrode plate
212: first substrate tab
222: second substrate tab
214a: first insulating tape
214b: second insulating tape
226: insulating film

## Claims

1. An electrode assembly (110) comprising:
a first electrode plate (210) comprising:
a first electrode non-coated portion (213) spaced from opposite ends of the first electrode plate (210) in a longitudinal direction; and
a substrate tab (212) connected to one surface of the first electrode non-coated portion (213);
a second electrode plate (220) comprising:
a second electrode non-coated portion spaced from opposite ends of the second electrode plate (220) in the longitudinal direction; and
a substrate tab (222) connected to one surface of the second electrode non-coated portion;
a separator (215) between the first electrode plate (210) and the second electrode plate (220); and
a first insulating tape (214a) and a second insulating tape (214b) covering a part of the substrate tab (212, 222) of at least one of the first electrode plate (210) and the second electrode plate (220),
wherein the first insulating tape (214a) and the second insulating tape (214b) have different colors from each other.

2. The electrode assembly (110) according to claim 1, wherein the first electrode plate (210) is a negative electrode, and the second electrode plate (220) is a positive electrode.

3. The electrode assembly (110) according to claim 1 or claim 2, wherein the first insulating tape (214a) and the second insulating tape (214b) are on opposite surfaces of the substrate tab (212, 222), respectively.

4. The electrode assembly (110) according to any one of the preceding claims, wherein the colors of the first insulating tape (214a) and the second insulating tape (214b) are a combination of complementary colors.

5. The electrode assembly (110) according to any one of the preceding claims, wherein the colors of the first insulating tape (214a) and the second insulating tape (214b) are red and green, respectively.

6. The electrode assembly (110) according to any one of the preceding claims, wherein a width of each of the first insulating tape (214a) and the second insulating tape (214b) is greater than a width of the substrate tab (212, 222).

7. The electrode assembly (110) according to any one of the preceding claims, wherein a length of each of the first insulating tape (214a) and the second insulating tape (214b) is longer than a length of the first electrode non-coated portion (213) or the second electrode non-coated portion.

8. The electrode assembly (110) according to claim 7, wherein an upper end of each of the first insulating tape (214a) and the second insulating tape (214b) is arranged in an upper direction from an upper end of the electrode assembly (110).

9. The electrode assembly (110) according to claim 7 or claim 8, wherein a lower end of each of the first insulating tape (214a) and the second insulating tape (214b) is arranged in a lower direction from a lower end of the electrode assembly (110).

10. A secondary battery (100), comprising:
an electrode assembly (110) according to any one of the claims 1 to 9; and
a case (130) accommodating the electrode assembly (110).

11. An electrode assembly (110) inspection method of a secondary battery (100), comprising:
connecting substrate tabs (212, 222) to non-coated portions (213) of a first electrode plate (210) and a second electrode plate (220), respectively;
arranging a first insulating tape (214a) and a second insulating tape (214b) on surfaces of at least one of the substrate tabs (212, 222);
inspecting a presence or an absence of, and arrangement positions of, the first insulating tape (214a) and the second insulating tape (214b) by utilizing a vision inspection device (800);
cutting the first electrode plate (210) and the second electrode plate (220); and
winding the first electrode plate (210), the second electrode plate (220), and a separator (215) between the first electrode plate (210) and the second electrode plate (220),
wherein the first insulating tape (214a) and the second insulating tape (214b) have different colors from each other.

12. The electrode assembly (110) inspection method according to claim 11, wherein the inspecting of the presence or absence of, and the arrangement positions of, the first insulating tape (214a) and the second insulating tape (214b) by utilizing the vision inspection device (800) comprises:
utilizing a color filter (836a) having a complementary color to the colors of the first insulating tape (214a) and the second insulating tape 214b to inspect the presence or absence of, and the arrangement positions of, the first insulating tape (214a) and the second insulating tape (214b).

13. The electrode assembly (110) inspection method according to claim 12, wherein the color filter (836a) is blue or red.

14. The electrode assembly (110) inspection method according to any one of the claims 11 to 13, wherein the first insulating tape (214a) and the second insulating tape (214b) are on opposite surfaces of the at least one of the substrate tabs (212, 222), respectively.

15. The electrode assembly (110) inspection method according to any one of the claims 11 to 14, wherein the colors of the first insulating tape (214a) and the second insulating tape (214b) are a combination of complementary colors.
